# EUROPÄISCHE PATENTSCHRIFT

(11) **EP 3 688 556 B1**
(45) Veröffentlichungstag und Bekanntmachung des Hinweises auf die Patenterteilung: **13.03.2024**
(21) Anmeldenummer: 18773732.5
(22) Anmeldetag: 14.09.2018
(51) Int. Cl.: H04B 5/00, G06F 1/12, H04J 3/06, H04L 7/00

(54) **VORRICHTUNG UND VERFAHREN ZUR ÜBERTRAGUNG VON DATEN ZWISCHEN ZWEI PHYSIKALISCHEN SCHNITTSTELLEN**
DEVICE AND METHOD FOR TRANSMITTING DATA BETWEEN TWO PHYSICAL INTERFACES
DISPOSITIF ET PROCÉDÉ DE TRANSMISSION DE DONNÉES ENTRE DEUX INTERFACES PHYSIQUES

(30) Priorität: 26.09.2017 DE 102017217051
(43) Veröffentlichungstag der Anmeldung: 05.08.2020
(73) Patentinhaber: Spinner GmbH, 83620 Feldkirchen-Westerham (DE)
(72) Erfinder: KLEIN, Thomas, 83607 Holzkirchen (DE); LEGE, Michael, 83052 Bruckmühl (DE)
(74) Vertreter: Rösler, Uwe
(86) Internationale Anmeldenummer: PCT/EP2018/074878
(87) Internationale Veröffentlichungsnummer: WO 2019/063318

(56) Entgegenhaltungen:
- EP-A1- 0 520 535
- EP-A1- 1 365 555
- WO-A1-2013/164265
- WO-A1-2017/098871
- DE-A1-102009 044 618
- US-A1- 2002 172 228
- US-A1- 2010 091 935
- US-A1- 2016 087 780
- US-A1- 2017 270 984

## Beschreibung

### Technisches Gebiet

Die Erfindung bezieht sich auf eine Vorrichtung sowie auf ein Verfahren zur Übertragung von Daten zwischen zwei physikalischen Schnittstellen, die relativ zueinander längs einer Trajektorie beweglich angeordnet sind.

### Stand der Technik

Ein Maß für die Leistungsfähigkeit der Übertragung digitaler Daten über einen Übertragungskanal stellt die Datenübertragungsrate dar, die die digitale Datenmenge angibt, die innerhalb einer Zeitspanne fehlerfrei übertragen werden kann. Zumeist bezieht sich diese Angabe auf die kleinste Dateneinheit, das Bit, so dass mit dem Begriff der Datenübertragungsrate die sogenannte Bitrate in der Einheit bit/s zugrunde gelegt wird.

Eine besondere Herausforderung für die Realisierung schneller Datenübertragungen, bspw. mit Übertragungsraten von 100 Mbit/s oder 1 Gbit/s und mehr, besteht in der fehlerfreien Datenübertragung längs eines Übertragungskanals, der eine kontaktlose und/oder eine dynamisch veränderliche Datenübertragungseinheit vorsieht, bspw. in Form eines kontaktierenden oder kontaktfreien Drehübertragers. Im Unterschied zu widerstandreduzierten kontinuierlichen Übertragungsleitungen bildet eine vorstehend bezeichnete Datenübertragungseinheit längs eines Übertragungskanals eine die Signalqualität der zu übertragenden digitalen Daten beeinträchtigende Störquelle, die einer fehlerfreien Übertragung "schneller Datensignale", d. h. Daten mit hohen Datenraten, entgegensteht.

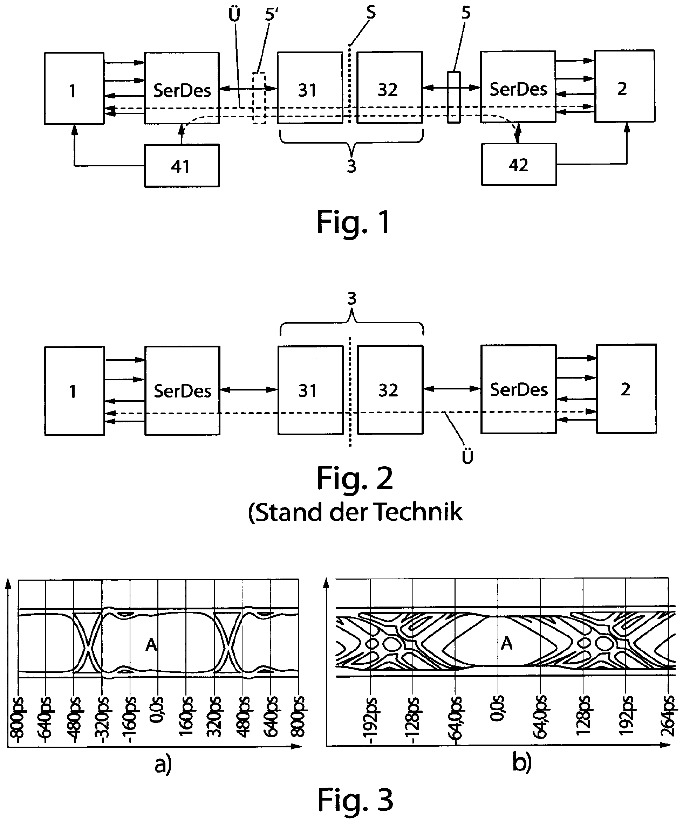

In Figur 2 ist ein an sich bekannter Aufbau als Blockdiagramm einer digitalen Datenübertragung zwischen zwei physikalischen Schnittstellen 1, 2 illustriert. Längs des die beiden physikalischen Schnittstellen 1, 2 verbindenden Datenübertragungskanals Ü ist eine kontaktlose Koppeleinheit 3 eingebracht, bspw. in Form einer kapazitiven, induktiven, elektromagnetischen, akustischen oder optischen Schnittstelle, die zwei kontaktfrei und/oder relativbeweglich zueinander angeordnete Koppeleinheiten 31 und 32 besitzt. In Abhängigkeit der Ausbildung beider physikalischen Schnittstellen 1, 2 sind optional jeweils zur Realisierung einer seriellen Datenübertragung über die kontaktlose Datenübertragungseinheit 3 jeweils ein Serialisierer/Deserialisierer, kurz SerDes, zwischen den physikalischen Schnittstellen 1, 2 und der kontaktlosen Datenübertragungseinheit 3 angeordnet.

Das Ausmaß der durch die Datenübertragungseinheit 3 verursachten Störungen auf die übertragenen digitalen Daten, die im Falle einer Datenübertragung von der ersten zur zweiten Schnittstelle an der zweiten Schnittstelle zum weiteren Abgriff vorliegen, kann anhand eines sog. Augendiagramms illustriert und beurteilt werden, das jeweils in den Figuren 3a und b illustriert ist. In beiden Diagrammen sind längs der Ordinate jeweils der Signalpegel angetragen, d. h. das jeweils untere Pegelniveau entspricht "0" und das ober Pegelniveau "1", und längs der Abszisse, die der Zeitachse entspricht, die Schaltzeiten zu entnehmen, anhand der die zeitliche reale Schaltdauer zwischen den Bitsignalen "0" und "1" zu entnehmen sind.

Im Falle der Figur 3a, die eine Datenübertragungsrate mit 1,25 Gbit/s illustriert, ist die horizontale sowie auch vertikale Öffnung eines "Auges" A deutlich ausgeprägt, die eine gute Signalqualität und eine damit verbundene eindeutige empfangsseitige korrekte, d. h. fehlerfreie Signaldetektion illustriert. Im Falle der Figur 3b, die eine digitale Datenübertragung mit einer Datenübertragungsrate von 3,125 Gbit/s entspricht, schließt sich das "Auge" A signifikant, wodurch eine fehlerfreie Detektion empfangener Daten nicht oder nicht ohne weiteres möglich ist. Je nach Ausbildung der Datenübertragungseinheit, bspw. in Form einer kontaktlosen Datenübertragungseinheit und/oder einer zwei zueinander relativ beweglich zueinander gelagerter Koppelelemente aufweisende Datenübertragungseinheit, bilden sich zum einen Amplitudenschwankungen und der sog. Jitter, der sich durch zeitliches Taktzittern bezüglich Frequenz sowie Phasenlage der übertragenen digitalen Datensignale auszeichnet, in unterschiedlichem Maße aus.

Erfolgt die Datenübertragung im Rahmen einer Netzwerkstruktur, bedarf es für einen gesicherten Datenaustausch Netzwerkprotokolle, deren Komplexität sich im OSI-Schichtmodell wiederspiegelt, das über sieben aufeinander aufbauende Schichten verfügt, von denen die erste Schicht die sog. Bitübertragungsschicht bildet, die die Anforderungen an sämtliche zur Datenübertragung erforderliche Hardwarekomponenten definiert. Ist diese Schicht so ausgebildet, dass unter allen Einsatzbedingungen eine fehlerfreie Datenübertragung über die Datenübertragungseinheit gewährleistet ist, kommen höhere Schichten der Netzwerkprotokolle bezüglich Datenkorrektur gar nicht erst zum Einsatz. Ethernet, als die am weitest verbreitete Protokoll Schnittstelle, bildet heutzutage insbesondere auch bei industriellen Anwendungen einen weit verbreiteten Standard. Insbesondere bei industriellen Systemen zur unmittelbaren Steuerung und Abwicklung von Prozessen ist die sog. Echtzeitfähigkeit eine unabdingbare Voraussetzung an die digitale Datenübertragung bspw. zwischen einer als Master dienenden Sendeeinheit und einer als Slave bezeichnete Empfängereinheit oder einer Vielzahl derartiger Slaves, die es gilt durch den Master zeitsynchron anzusteuern, so dass alle als Slaves bezeichneten Empfängereinheiten "Hand in Hand" arbeiten können. Die Echtzeitfähigkeit definiert sich durch die Vorhersagbarkeit, wann eine abgeschickte Nachricht vom Sender beim jeweiligen Empfänger möglichst exakt eintrifft. Die für den Echtzeitbetrieb erforderlichen echtzeitfähigen Kommunikationsprotokolle definieren sog. Zykluszeiten und einen maximalen Jitter für das Gesamtsystem, um eine fehlerfreie Funktionalität gewährleisten zu können. Ein echtzeitfähiges Netzwerkprotokoll stellt bspw. der offene Industrie-Ethernet-Standard Profinet CC-C dar, der Zykluszeiten von typisch 250 µs bis minimal 31,25 µs sowie einen GesamtSystem-Jitter von < 1 µs festlegt.

Der Druckschrift DE 600 02 571 T2 ist eine elastische Schnittstellenanordnung zwischen zwei auf einem gemeinsamen Trägersubstrat aufgebrachten Chips zu entnehmen, von denen jeder über eine sogenannte elastische Schnittstelleneinheit verfügt, die jeweils zwei, über eine Schaltlogik verbundene Speichereinheiten verfügt. In Abhängigkeit eines an die Schaltlogik anlegbaren Steuersignals erfolgt eine Ausgabe eines Datenwertes aus der ersten oder zweiten Speichereinheit.

Die Druckschrift US 6,6640,277 B1 beschreibt eine synchronisierte Datenübertragung zwischen Bussen mit einem standardisierten Kommunikationsprotokoll, wobei zum Ausgleich von auftretenden Phasenunterschieden Ringspeicher als Zwischenspeicher verwendet werden.

Die Druckschrift US 2017/0127465 A1 beschreibt eine kontaktlose Datenübertragung mittels elektromagnetischer Kopplung, bei der auftretende Phasenunterschiede mittels Zwischenspeicherung der Daten ausgeglichen werden.

Die Druckschrift US 2002/172228 A1 betrifft die Reduzierung des Jitter-Effektes, der bei einer Übertragung digitaler Daten von einem Sender zu einem Empfänger, so auch zwischen zwei sich zueinander drehenden Sende-/ und Empfangseinheiten auftritt. Zur Lösung werden sende- und empfangsseitig jeweils eine Takt- und Daten Rückgewinnungsschaltung, bspw. in Form eines Phasenregelkreises (PLL) eingesetzt.

### Darstellung der Erfindung

Der Erfindung liegt die Aufgabe zugrunde, eine Vorrichtung sowie ein Verfahren zur Übertragung von Daten zwischen zwei physikalischen Schnittstellen derart anzugeben, so dass den Anforderungen an die Echtzeitfähigkeit bei der digitalen Datenübertragung über eine Datenübertragungseinheit entsprochen werden kann, wobei die Datenübertragungseinheit entweder eine kontaktlose Datenübertragung realisiert oder eine kontaktbehaftete Datenübertragung zwischen zwei relativ zueinander sich bewegenden Koppeleinheiten ermöglicht. Neben der geforderten Echtzeitfähigkeit soll die Datenübertragung protokollunabhängig erfolgen, so dass eine möglichst kundenunspezifische Anwendungsmöglichkeit erzielt werden kann. Die lösungsgemäße Datenübertragung soll überdies sowohl für eine uni- als auch bidirektionale Datenübertragung längs eines Übertragungskanales ermöglichen.

Die Lösung der der Erfindung zugrundeliegenden Aufgabe ist im Anspruch 1 angegeben. Gegenstand des Anspruches 9 ist ein Verfahren zur Übertragung von

Daten über einen Daten-Übertragungskanal. Den Erfindungsgedanken in vorteilhafter Weise weiterbildende Merkmale sind Gegenstand der Unteransprüche sowie der weiteren Beschreibung insbesondere unter Bezugnahme auf die Figuren zu entnehmen.

Die lösungsgemäße Vorrichtung zur Übertragung von digitalen Daten zwischen zwei physikalischen Schnittstellen weist eine zwischen den physikalischen Schnittstellen angeordnete Datenübertragungseinheit auf, die die Daten vorzugsweise kontaktlos überträgt oder die Daten kontaktbehaftet zwischen zwei sich relativ zueinander bewegenden Koppeleinheiten überträgt. An jeder der beiden physikalischen Schnittstellen, die vorzugsweise identisch ausgebildet sind, ist jeweils eine Oszillatoreinheit zur Einprägung einer am Ort der jeweiligen physikalischen Schnittstelle vorherrschenden lokalen Systemzeit angeordnet. Wenigstens eine der beiden Oszillatoreinheiten weist ein Mittel zur Erzeugung und Übertragung wenigstens eines Clocksignals an die Datenübertragungseinheit auf. Die lokale Oszillatoreinheit an wenigstens der anderen physikalischen Schnittstelle verfügt über ein Mittel zum Empfang des wenigstens einen über die Datenübertragungseinheit übertragenen Clocksignals und verfügt darüber hinaus über ein Mittel zur Synchronisation der lokalen Systemzeiten auf Basis des empfangenen Clocksignals. Die Besonderheit der Synchronisation der lokalen Systemzeiten an beiden physikalischen Schnittstellen beruht auf der Übertragung des wenigstens einen Clocksignals über den exakt gleichen Übertragungskanal, über den auch die digitalen Daten, auch als Nutzdaten bezeichnet, zwischen beiden physikalischen Schnittstellen übertragen werden.

Ein systembedingt zufällig entstehender Phasenversatz in den über die Datenübertragungseinheit übertragenden Daten, dem auch das wenigstens eine übertragene Clocksignals unterliegt, wird lösungsgemäß mit Hilfe eines seitens der die Daten empfangenen physikalischen Schnittstelle vorgesehenen Zwischenspeichers ausgeglichen, in den die vermittels der Datenübertragungseinheit übertragenen Daten temporär zwischenspeicherbar sind.

Der Zwischenspeicher ist derart ausgebildet, dass eine dem Zwischenspeicher zuordenbare Speichertiefe in Abhängigkeit eines sich im Wege der Datenübertragung in den übertragenden Daten einstellenden maximalen zeitlichen Phasenversatzes gewählt wird.

Je nach Art und Auslegung der Datenübertragungseinheit stellt sich bei der Datenübertragung ein konstanter oder ein sich zeitlich variierender Phasenversatz ein. In beiden Fällen ist es zu Zwecken der Phasenversatzkompensation die Speichertiefe als konstant vorgegebene Größe zu wählen. Eine weitere Ausführungsform sieht ein Mittel seitens der die Daten empfangenen physikalischen Schnittstelle vor, das den sich im Wege der Datenübertragung einstellenden Phasenversatz detektiert. In diesem Fall ist ein weiteres Mittel zu Seiten der die Daten empfangenden physikalischen Schnittstelle vorgesehen, das die Speichertiefe des Zwischenspeichers in Abhängigkeit des detektierten maximalen Phasenversatzes geeignet festlegt.

In besonders vorteilhafter Weise eignet sich als Zwischenspeicher ein Ringspeicher, in den die Daten zu Zwecken der Phasenversatzkompensation zwischengespeichert werden. Um mit einem möglichst geringen Speichervolumen auskommen zu können, werden die Daten in Abhängigkeit der Speichertiefe in den Ringspeicher abgelegt und zyklisch überschrieben. Auf diese Weise können die Latenzzeit, d.h. jene Laufzeit der Daten, zwischen dem Empfang seitens der einen physikalischen Schnittstelle und dem Aussenden seitens der anderen physikalischen Schnittstelle und umgekehrt, sowie der Jitter, der die zeitliche Änderung eines Bitwechsels im Datensignal beeinflusst, auf ein Minimum reduziert werden und die Echtzeitfähigkeit des Systems ermöglicht werden.

Die lösungsgemäße Vorrichtung zur Übertragung von Daten beschränkt sich ausschließlich auf Hardwarekomponenten, deren Anordnung und Funktion bezüglich der Synchronisation der lokalen Systemzeiten sowie der Phasenversatzkompensation sich ausschließlich auf die unmittelbare Bitübertragung beziehen, d.h. die der im OSI-Modell beschriebenen ersten Schicht, der sog. BitÜbertragungsschicht bzw. Physical Layer zugeordnet sind. Aus diesem Grund ermöglicht die lösungsgemäße Vorrichtung eine protokollunabhängige Implementation in bereits bestehende Kommunikationsnetzwerke, so dass für die Inbetriebnahme keine oder nur geringfügige kundenspezifischen Anpassungen erforderlich sind.

Die physikalischen Schnittstellen sind zur Übertragung und Weiterleitung jeweils einer kleinsten Dateneinheit in Form eines Datenbits oder Symbols geeignet ausgebildet und können je nach Bedarf und Anforderungen als elektrische, elektromagnetische, akustische oder optische Schnittstellen ausgebildet sein, über die die Daten mit einem an sich bekannten standardisierten Kommunikationsprotokoll übertragbar sind.

In vorteilhafter Weise sind die physikalischen Schnittstellen jeweils mit einem geeignet ausgebildeten Kopplungselement verbunden oder Teil eines solchen, das eine mechanisch stabile und übertragungstechnisch verlustarme bzw. -freie Datenübertragung sorgt. Am Ort einer jeweiligen physikalischen Schnittstelle ist, wie vorstehend erwähnt, jeweils eine lokale Oszillatoreinheit angeordnet, die mit dem jeweiligen Kopplungselement verbunden ist und vorzugsweise eine Baueinheit bildet.

Im Falle einer parallel ausgeführten physikalischen Schnittstelle, über die mehrere Bits parallel übertragen werden, bedarf es in vorteilhafter Weise aus Gründen einer seriellen Übertragung der Daten über die Datenübertragungseinheit zwischen der Datenübertragungseinheit und den physikalischen Schnittstellen jeweils eines Mittels zur Umwandlung eines parallelen Datenstromes in einen seriellen Datenstrom. Hierzu dienen die an sich bekannten Serializer/Deserializer, kurz SerDes.

Das der lösungsgemäße Vorrichtung zur Übertragung von Daten zwischen zwei physikalischen Schnittstellen über eine Datenübertragungseinheit zugrunde liegende Verfahrensprinzip sieht zunächst das Generieren wenigstens eines Clocksignals seitens einer der beiden physikalischen Schnittstellen vor, das im Weiteren über den gleichen Daten-Übertragungskanal übertragen wird, über den auch sämtliche Daten in Form von Nutzdaten übertragen werden. Das über den Daten-Übertragungskanal übertragene Clocksignal wird seitens der empfangenden physikalischen Schnittstelle zu Zwecken einer Synchronisierung der lokalen Systemzeiten an beiden physikalischen Schnittstellen genutzt. Nach Herstellen einer Zeitsynchronität zwischen beiden lokalen Systemzeiten an beiden physikalischen Schnittstellen werden die zu übertragenen Daten über den Datenübertragungskanal übertragen und empfangsseitig in einen Zwischenspeicher zwischengespeichert. Das Zwischenspeichern der übertragenen Daten erfolgt innerhalb des Zwischenspeichers mit einer Speichertiefe, die an einen sich im Wege der Datenübertragung in den übertragenen Daten einstellenden maximalen zeitlichen Phasenversatz derart angepasst wird, so dass die aus dem Zwischenspeicher ausgelesenen Daten phasensynchron zu der lokal vorherrschenden Clockphase über die physikalische Schnittstelle ausgesendet werden können. Die Zwischenspeicherung der Daten innerhalb des vorzugsweise als Ringspeicher ausgebildeten Zwischenspeichers erfolgt zyklisch, so dass die Phasenversatzkompensation mit einem geringen Speichervolumen realisierbar ist.

Die lösungsgemäße Vorrichtung sowie das der Vorrichtung zugrundeliegende Verfahren werden anhand der nachstehenden Figuren näher erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Blockdiagramm zur Datenübertragung in Echtzeit,
- Fig. 2: Blockdiagramm zur Datenübertragung über eine Datenübertragungseinheit gemäß Stand der Technik, sowie
- Fig. 3a, b: Augendiagramme.

### Wege zur Ausführung der Erfindung, gewerbliche Verwendbarkeit

Figur 1 zeigt ein Blockdiagramm, das eine lösungsgemäße Vorrichtung zur Übertragung von Daten zwischen zwei physikalischen Schnittstellen 1, 2, die jeweils identisch ausgebildet sind, darstellt. Längs des die beiden physikalischen Schnittstellen 1, 2 verbindenden Übertragungskanals Ü ist eine kontaktlose Datenübertragungseinheit 3 angeordnet. Die Datenübertragungseinheit 3 ist bspw. in Form einer kapazitiv oder induktiv wirkenden elektrischen Datenübertragungseinheit ausgebildet, die bspw. in der DE 44 129 58 A1 offenbart ist. In einem dort beschriebenen Ausführungsbeispiel zur Übertragung von Daten zwischen zwei drehbar zueinander gelagerten Koppeleinheiten 31, 32 sieht eine Koppeleinheit 31 eine kreisringförmig ausgebildete Leiterstruktur vor, die getrennt durch einen Spalt S, gegenüber der andere Koppeleinheit 32 angeordnet ist, die eine stationär angeordnete elektrische Elektrodenanordnung vorsieht. Selbstverständlich sind auch alternative Ausgestaltungsformen zur Ausbildung der Datenübertragungseinheit 3 denkbar, bspw. in Art einer kontaktlosen optischen oder elektromagnetischen oder akustischen oder in Form einer kontaktbehafteten schleifringartig ausgebildeten Datenübertragungseinheit 3.

Um die Datenübertragung zwischen beiden physikalischen Schnittstellen 1, 2 fehlerfrei vornehmen zu können, sind an jeder der physikalischen Schnittstelle 1, 2 jeweils eine Oszillatoreinheit 41, 42 angebracht. Um die Datenübertragung mit nur geringer Verzögerungszeit und mit hohen Buslasten, d. h. unter Nutzung möglichst der gesamten Übertragungskapazität des Übertragungskanals vornehmen zu können, ist es erforderlich, beide Oszillatoreinheiten 41, 42 zu synchronisieren. Die zeitliche Synchronisation beider Oszillatoreinheiten erfolgt lösungsgemäß mit Hilfe wenigstens eines erzeugten Clocksignals, bspw. am Ort der Oszillatoreinheit 41, das über den gleichen Übertragungskanal Ü übertragen wird, über den auch die Nutzdaten von einer zur anderen physikalischen Schnittstelle gelangen.

Im Falle des in Figur 1 illustrierten Ausführungsbeispiels sei angenommen, dass beide physikalische Schnittstellen 1, 2 als Parallelschnittstellen ausgebildet sind. Um eine Umwandlung des parallelen Datenformats in ein zur Übertragung der Daten über die Datenübertragungseinheit 3 geeignetes serielles Datenformat zu erhalten, sind jeweils zwischen den physikalischen Schnittstelle 1, 2 und der Datenübertragungseinheit 3 ein Serialisierer/Deserialisierer, SerDes, angeordnet, über die auch zu Zwecken der zeitlichen Synchronisation der lokalen Systemzeiten an beiden Oszillatoreinheiten 41, 42 das wenigstens eine Clocksignal übertragen wird.

Der sich bei der Datenübertragung der digitalen Nutzsignale zufällig ausbildende und sich insbesondere bei einer sich drehenden Datenübertragungseinheit 3 ändernde Phasenversatz wird zu dessen Kompensation mit Hilfe eines empfangsseitig angeordneten Zwischenspeichers 5 ausgeglichen. Hierzu werden in den Zwischenspeicher 5, der vorzugsweise in Form eines Ringspeichers ausgebildet ist, die Nutzdaten in zyklischer Weise zwischengespeichert, bevor sie über den lokalen Clock der empfangsseitigen physikalischen Schnittstelle 2 übergeben werden.

Im Falle einer unidirektionalen Datenübertragung, bspw. von der physikalischen Schnittstelle 1 zur physikalischen Schnittstelle 2 dient die Oszillatoreinheit 41 als Master-Oszillatoreinheit und die empfangsseitig angeordnete Oszillatoreinheit 42 als Slave-Oszillatoreinheit. Zum Zwecke der Synchronisation ist an der Slave-Oszillatoreinheit 42 ein entsprechendes Mittel zur zeitlichen Synchronisation vorgesehen. Ebenso ist auch empfangsseitig der Zwischenspeicher 5 angebracht.

Im Falle einer bidirektionalen Datenübertragung sind beidseitig zur Datenübertragungseinheit 3 zumindest ein Zwischenspeicher 5 vorzusehen, siehe auch Figur 1 strichliert gezeichneter Zwischenspeicher 5' auf der Seite der physikalischen Schnittstelle 1. Nicht notwendigerweise, jedoch in vorteilhafter Form sind im Falle einer bidirektionalen Datenübertragung auch beide Oszillatoreinheiten 41, 42 für die Generation und Empfang von Clocksignalen auszubilden. Werden hingegen neben den zu übertragenden Daten auch das Clocksignal kundenseitig zur Verfügung gestellt, so ist die Generation eines Clocksignals mittels der Oszillatoreinheit nicht erforderlich. In diesem Fall der externen Zuführung des Clocksignals getrennt oder gemeinsam mit den zu übertragenen Daten kann das extern zugeführte Clocksignal für die Synchronisation der lokalen Systemzeiten jeweils an der ersten und zweiten Schnittstelle genutzt werden.

Mit der lösungsgemäßen Vorrichtung konnten Daten über eine drehbare Datenübertragungseinheit 3 unter Echtzeitbedingungen fehlerfrei übertragen werden. Es konnten Zykluszeiten von 1,12 µs realisiert werden, die weit unterhalb der von der Profinet CC-C-Anwendung geforderten Zykluszeit von 250 µs bzw. minimal 31,25 µs liegt. Zudem liegt der experimentell nachgewiesene Jitter von 25 ns weit unter dem durch die Profinet CC-C Anwendung vorgegebene maximale Jitter von < 1 µs. Die lösungsgemäße Vorrichtung besitzt daher eine weitgehend unbeschränkte Kompatibilität mit bestehenden Netzwerkstrukturen.

### Bezugszeichenliste

- 1, 2: Physikalische Schnittstelle
- 3: Datenübertragungseinheit
- 31, 32: Koppeleinheit
- 41, 42: Oszillatoreinheit
- 5, 5': Zwischenspeicher
- Ü: Übertragungskanal
- A: Augenöffnung
- SerDes: Serialisierer/Deserialisierer

## Patentansprüche

1. Vorrichtung zur Übertragung von digitalen Daten mit
- zwei physikalischen Schnittstellen (1, 2), von denen eine erste physikalische Schnittstelle an einer rotierenden Einheit und eine zweite physikalische Schnittstelle an einer stationären Einheit angebracht sind,
- einer zwischen den physikalischen Schnittstellen (1, 2) angeordneten, die digitalen Daten längs eines Datenübertragungskanals (Ü) übertragenden Datenübertragungseinheit (3), die kreisringförmig ausgebildet ist.
sowie
- jeweils einer den physikalischen Schnittstellen (1) zugeordneten lokalen Oszillatoreinheit (41) zur Einprägung einer am Ort einer der physikalischen Schnittstelle (1) vorherrschenden lokalen Systemzeit, wobei die lokale Oszillatoreinheit (41) an wenigstens einer der physikalischen Schnittstellen (1) ein Mittel zur Erzeugung und Übertragung wenigstens eines Clocksignals an die Datenübertragungseinheit (3) aufweist und die lokale Oszillatoreinheit (42) an wenigstens der anderen physikalischen Schnittstelle (2) ein Mittel zum Empfang des wenigstens einen über die Datenübertragungseinheit (3) längs des exakt gleichen Übertragungskanals (Ü), über den die digitalen Daten übertragbar sind, übertragbaren Clocksignals sowie ein Mittel zur Synchronisation der lokalen Systemzeiten auf Basis des empfangenen Clocksignals aufweist,
**dadurch gekennzeichnet, dass** jeweils seitens der die digitalen Daten empfangenden physikalischen Schnittstelle (2) ein Zwischenspeicher (5) in Form eines Ringspeichers vorgesehen ist, dessen Speichertiefe in Abhängigkeit eines sich im Wege der Datenübertragung in den übertragenen digitalen Daten einstellenden zeitlichen Phasenversatzes gewählt ist und in den die vermittels der Datenübertragungseinheit (3) übertragenen digitalen Daten temporär zwischenspeicherbar sind,
dass ein Mittel vorgesehen ist, das den sich im Wege der Datenübertragung einstellende Phasenversatz detektiert, und
dass ein weiteres Mittel vorgesehen ist, das die Speichertiefe in Abhängigkeit des Phasenversatzes festlegt.

2. Vorrichtung nach Anspruch 1,
**dadurch gekennzeichnet, dass** die physikalischen Schnittstellen (1, 2) identisch ausgebildet sind.

3. Vorrichtung nach Anspruch 1 oder 2,
**dadurch gekennzeichnet, dass** die physikalischen Schnittstellen (1, 2) zur Übertragung und Weiterleitung einer kleinsten Dateneinheit in Form eines Datenbits geeignet ausgebildet sind.

4. Vorrichtung nach einem der Ansprüche 1 bis 3,
**dadurch gekennzeichnet, dass** die Datenübertragungseinheit (3) die digitalen Daten kontaktlos überträgt.

5. Vorrichtung nach Anspruch 4,
**dadurch gekennzeichnet, dass** die kontaktlose Datenübertragungseinheit (3) als kapazitive, induktive, akustische, elektromagnetische oder optische Koppeleinheit ausgebildet ist.

6. Vorrichtung nach einem der Ansprüche 1 bis 5,
**dadurch gekennzeichnet, dass** die physikalische Schnittstelle (1, 2) eine elektrische, elektromagnetische, akustische oder optische Schnittstelle ist, über die die digitalen Daten mit einem standardisierten Kommunikationsprotokoll übertragbar sind.

7. Vorrichtung nach einem der Ansprüche 1 bis 6,
**dadurch gekennzeichnet, dass** die physikalischen Schnittstellen (1, 2) jeweils mit einem Kopplungselement (31, 32) verbunden oder Teil eines solchen sind, das jeweils mit einer der Oszillatoreinheiten (41, 42) verbunden ist.

8. Vorrichtung nach einem der Ansprüche 1 bis 7,
**dadurch gekennzeichnet, dass** zwischen der Datenübertragungseinheit (3) und den physikalischen Schnittstellen (1, 2) jeweils ein Mittel zur Umwandlung eines parallelen Datenstromes in einen seriellen Datenstrom (SerDes) derart vorgesehen ist, so dass die Übertragung der digitalen Daten über die Datenübertragungseinheit (3) in serieller Datenabfolge erfolgt.

9. Verfahren zur Übertragung von digitalen Daten über einen Datenübertragungskanal (Ü) zwischen zwei physikalischen Schnittstellen (1, 2), unter Verwendung der Vorrichtung aus Anspruch 1.

10. Verfahren nach Anspruch 9,
**dadurch gekennzeichnet, dass** die Datenübertragung kontaktlos durchgeführt wird.

11. Verfahren nach Anspruch 9 oder 10,
**dadurch gekennzeichnet, dass** das Clocksignal getrennt oder gemeinsam mit den digitalen Daten über eine der beiden physikalische Schnittstelle (1, 2) erhalten wird.

## Claims

1. Device for transmitting data between two physical interfaces, with
- two physical interfaces (1, 2), of which a first physical interface is mounted on a rotating unit, and a second physical interface is mounted on a stationary unit,
- a data transmission unit (3) in the form of a circular ring which is arranged between the physical interfaces (1, 2) and transmits the digital data along a data transmission channel (U), and
- one local oscillator unit (41) assigned to each of the physical interfaces (1) for stamping a local system time in force at the location of one of said physical interfaces (1), wherein the local oscillator unit (41) at least at one of the physical interfaces (1) includes a means for generating and transmitting at least one clock signal to the data transmission unit (3), and the local oscillator unit (42) at least at the other physical interface (2) includes a means for receiving the at least one clock signal that is transmitted via the data transmission unit (3) along exactly the same transmission channel (U) as the digital data are also transmittable as well as a means for synchronising the local system times on the basis of the received clock signal,
**characterized in that** a buffer (5) in the form of a ring buffer is provided at each physical interface (2) receiving the digital data, the memory depth of which is selected according to a temporal phase shift formed in the transmitted digital data in the course of the data transmission, and in which the digital data transmitted by means of the data transmission unit (3) can be buffered temporarily,
that a means is provided which detects the phase shift formed in the course of the data transmission, and
that a further means is provided which defines the memory depth depending on the phase shift.

2. Device according to Claim 1, **characterized in that** the physical interfaces (1, 2) are of identical design.

3. Device according to Claim 1 or 2, **characterized in that** the physical interfaces (1, 2) are designed such that they are able to transmit and forward a smallest data unit in the form of a data bit.

4. Device according to any one of Claims 1 to 3, **characterized in that** the data transmission unit (3) transmits the digital data contactlessly.

5. Device according to Claim 4, **characterized in that** the contactless data transmission unit (3) is designed as a capacitive, inductive, acoustic, electromagnetic, or optical coupling unit.

6. Device according to any one of Claims 1 to 5, **characterized in that** the physical interface (1, 2) is an electric, electromagnetic, acoustic, or optical interface, via which the digital data can be transmitted with a standardised communication protocol.

7. Device according to any one of Claims 1 to 6, **characterized in that** the physical interfaces (1, 2) are each connected to a coupling element (31, 32) or are part of such an element, each of which is connected to one of the oscillator units (41, 42).

8. Device according to any one of Claims 1 to 7, **characterized in that** a means for converting a parallel data streams into a serial data stream (SerDes) is provided between the data transmission unit (3) and each physical interface (1, 2) in such manner as to ensure that the transmission of the digital data via the data transmission unit (3) takes place in a serial data sequence.

9. Method for transmitting digital data via a data transmission channel (Ü) between two physical interfaces (1, 2) using a device according to Claim 1.

10. Method according to Claim 9, **characterized in that** the data transmission is performed contactlessly.

11. Method according to Claim 9 or 10, **characterized in that** the clock signal is received via one of the two physical interfaces (1, 2) separately from or together with the digital data.

## Revendications

1. Dispositif de transmission de données numériques avec
- deux interfaces physiques (1, 2), dont une première interface physique est montée sur une unité en rotation et une deuxième interface physique est montée sur une unité fixe,
- une unité de transmission de données (3), qui est constituée de forme circulaire, disposée entre les interfaces physiques (1, 2), transmettant les données numériques le long d'un canal de transmission de données (Ü), et
- respectivement une unité d'oscillateur locale (41) attribuée aux interfaces physiques (1) pour empreindre un temps de système local prédominant à l'emplacement d'une des interfaces physiques (1), sachant que l'unité d'oscillateur locale (41) comporte sur au moins une des interfaces physiques (1) un moyen de production et de transmission d'au moins un signal d'horloge à l'unité de transmission de données (3) et l'unité d'oscillateur locale (42) comporte sur au moins l'autre interface physique (2) un moyen de réception d'au moins un signal d'horloge transmissible par l'unité de transmission de données (3) le long du canal de transmission (Ü) exactement identique, par le biais duquel les données numériques peuvent être transmises, ainsi qu'un moyen de synchronisation des temps de système locaux sur la base du signal d'horloge reçu,
**caractérisé en ce qu'**à côté de l'interface physique (2) recevant respectivement les données numériques, une mémoire intermédiaire (5) est prévue sous la forme d'une mémoire annulaire, dont la profondeur de mémoire est choisie en fonction d'un décalage de phase temporel s'instaurant dans les données numériques transmises au cours de la transmission de données et dans laquelle les données numériques transmises au moyen de l'unité de transmission de données (3) peuvent être temporairement mémorisées,
**en ce qu'**un moyen est prévu, qui détecte le décalage de phase s'instaurant au cours de la transmission de données, et
**en ce qu'**un autre moyen est prévu, qui détermine la profondeur de mémoire en fonction du décalage de phase.

2. Dispositif selon la revendication 1, **caractérisé en ce que** les interfaces physiques (1, 2) sont constituées de façon identique.

3. Dispositif selon la revendication 1 ou 2, **caractérisé en ce que** les interfaces physiques (1, 2) sont constituées de façon adaptée pour la transmission et le transfert à une unité de données minimale sous la forme d'un bit de données.

4. Dispositif selon l'une quelconque des revendications 1 à 3, **caractérisé en ce que** l'unité de transmission de données (3) transmet les données numériques sans contact.

5. Dispositif selon la revendication 4, **caractérisé en ce que** l'unité de transmission de données sans contact (3) est constituée sous la forme d'une unité de couplage capacitive, inductive, acoustique, électromagnétique ou optique.

6. Dispositif selon l'une quelconque des revendications 1 à 5, **caractérisé en ce que** l'interface physique (1, 2) est une interface électrique, électromagnétique, acoustique ou optique par le biais de laquelle les données numériques peuvent être transmises avec un protocole de communication normalisé.

7. Dispositif selon l'une quelconque des revendications 1 à 6, **caractérisé en ce que** les interfaces physiques (1, 2) sont respectivement reliées à un élément de couplage (31, 32) ou font partie d'un élément analogue, qui est relié respectivement à une des unités d'oscillateur (41, 42).

8. Dispositif selon l'une quelconque des revendications 1 à 7, **caractérisé en ce qu'**un moyen de conversion d'un flux de données parallèle en un flux de données en série (SerDes) est respectivement prévu entre l'unité de transmission de données (3) et les interfaces physiques (1, 2) de telle manière que la transmission des données numériques à lieu en une séquence de données (3) en série par le biais de l'unité de transmission de données.

9. Procédé de transmission de données numériques par un canal de transmission de données (Ü) entre deux interfaces physiques (1, 2) en utilisant le dispositif selon la revendication 1.

10. Procédé selon la revendication 9, **caractérisé en ce que** la transmission de données est exécutée sans contact.

11. Procédé selon la revendication 9 ou 10, **caractérisé en ce que** le signal d'horloge est reçu séparément ou conjointement aux données numériques par le biais d'une des deux interfaces physiques (1, 2).
